# EUROPEAN PATENT SPECIFICATION

(11) **EP 2 858 951 B1**
(45) Date of publication and mention of the grant of the patent: **08.05.2024**
(21) Application number: 13768093.0
(22) Date of filing: 27.03.2013
(51) Int. Cl.: C02F 3/10, C02F 3/12, C02F 3/30

(54) **A NEW WASTEWATER TREATMENT AND SOLIDS REDUCTION PROCESS**
NEUES ABWASSERBEHANDLUNGS- FESTSTOFFREDUKTIONSVERFAHREN
NOUVEAU PROCÉDÉ DE TRAITEMENT DES EAUX USÉES ET DE RÉDUCTION DES SOLIDES

(30) Priority: 27.03.2012 AU 2012901238
(43) Date of publication of application: 15.04.2015
(73) Proprietor: Daneshvar, Mohammad, Taghi, Little Bay, NSW 2036 (AU)
(72) Inventor: Daneshvar, Mohammad, Taghi, Little Bay, NSW 2036 (AU)
(74) Representative: KIPA AB
(86) International application number: PCT/AU2013/000346
(87) International publication number: WO 2013/142923

(56) References cited:
- WO-A1-03/072513
- CA-A1- 2 542 894
- CN-A- 101 525 207
- FR-A1- 2 760 739
- US-A- 4 842 920
- US-A1- 2003 111 412

## Description

### INTRODUCTION

The present invention concerns a process and attached growth media for treating wastewater. The process particularly includes a step of biological wastewater treatment which eliminating or greatly reducing excess biological sludge production. The invention may find application in a range of wastewater treatment plants from small on-sites package plants up to large domestic or industrial wastewater treatment plants. It can be used as a standalone total treatment or can be combined with other steps. It also can be used as a means to upgrade the existing plants to increase the capacity and/or quality of the treatment or to reduce or eliminate the biological excess sludge production of such plants.

### BACKGROUND

Water is the most vital thing for life. It is more vital than air as some of the living. things do not need air or even oxygen in any form to survive. Water can easily dissolve impurities including organic matters and will become polluted. Almost every water usage will add impurities to water and produce wastewater. How to remove these impurities in an efficient way to prevent -the spread of the pollutants to the wider environment or to reuse the water has been a major challenge in recent centuries in general and especially during recent decades. The standard practice to remove organic pollutants from water or in more. common word wastewater treatment is biological treatment. One of the side effects of biological treatment is the production of excess sludge where it is a source of pollution by itself and needs further treatment and disposal steps. These steps incur a high investment and operation costs.

In recent decades there has been increasing interests in the research and technology towards reducing excess biological sludge while producing good quality effluent. CA2542894 discloses a single-tank wastewater treatment system comprising suspended and immobilized microorganisms, wherein the system has a multiplicity of zones with different environmental conditions including aerobic, anoxic and anaerobic, to reduce the strength of highly concentrated wastewaters in terms of their content of organic carbonaceous compounds and nutrients, notably nitrogen and phosphorus. The upper zone of the treatment system operates under alternatively aerobic and anoxic conditions controlled by the on-off operation of an air blower that introduces air through air diffusers placed at the bottom of the upper zone. The lower section of the treatment system contains oxygen-depleted zones including anoxic conditions at the bottom and anaerobic conditions above the anoxic zones and below the air diffusers. The upper and lower sections of the tank are in fluid communication. Within the volume of upper aerobic zone and lower oxygen-depleted zones, loose carrier material or stationary objects are disposed to support the attachment of microbial biomass and the formation of microbial biofilm.

It is the object of the present invention to perform the biological treatment in a high rate and compact setup while reducing or eliminating the problem of excess sludge and solids production with the extra benefits of nitrogen removal and odour reduction.

### BRIEF DISCRIPTION OF THE INVENTION

The Invention is defined by the appended claims.

The Invention is a simple yet very advanced wastewater treatment process which can use unique packing medias that enhance attached microbial growth to large surface areas. The aerobic section of this process can use Super Aerators as aeration units that cover with high efficiency a large area of the bioreactor.

The Invention includes in its overall ensemble many flexibilities in handling the treatment of a diverse type of industrial and sanitary wastewaters.

The process can be used in different configurations such as with the packing media or without the packing media or as a stand alone treatment process or in combination with other processes or can be used in the side stream of a treatment plant to reduce the excess sludge production or as a solids reduction remedy and or to increase the treatment capacity or to add/increase the Nitrogen removal at the same time.

Figure F-1 shows the basic multi zone bioreactor. As can be seen influent wastewater along with the return sludge is introduced and distributed at the bottom of the relatively deep bioreactor. The aeration is done at the middle or at the upper part of the bioreactor. As the mixture of the influent wastewater and the returned sludge is moving upward from the bottom of the multi zone bioreactor, different zones are forming due to the availability of Nitrate and Oxygen. If Nitrate is present then the first zone at the bottom will be anoxic where Nitrate is getting utilized by microorganisms along with carbon sources thus N2 gas is generated. To increase the rate of denitrification, packing media can be placed at the bottom part of the bioreactor to increase the biomass populations there. After all Nitrates are consumed, due to lack of Oxygen anaerobic zone is formed. At this zone fat and other complex organic molecules break into simpler forms such as fatty acids that are easier to be oxidized later on at the aerobic zone.

Just beneath the aeration zone there is a zone that is neither aerobic nor anaerobic. Facultative bacteria are dominating in this zone. Aerators' turbulence will pull and push the aerobic and anaerobic bacteria into opposing zones and into facultative zone. Aerobic and anaerobic bacteria die off when in opposing zones.

Facultative bacteria consume the dead microorganisms and aerobic bacteria. At the other hand the resulting stress due to the turbulent movement of cells between different conditions and the rapid and recurring changes in the oxidation reduction potentials of their environment initiate futile cycle which cause uncoupling the energy and growth cycle and will lead to a state of high energy production instead of new cell production. These conditions can lead to the total and/or partial elimination of excess biological sludge production.

H2S is usually generated at the anaerobic zone and it is the main source of odor. Sulfide will turn into Sulfate in the upper aerobic zone hence the odor causing substance is eliminated and odor is removed.

In the upper part of the tank where the aeration is taking place, packing media for attached growth can. be used to ensure the existence of a large microorganisms population to utilize the aeration and the resultant dissolved Oxygen in a maximum fashion.

As mentioned before, the process can work with or without packing media. Packing media is better to be used in the aerobic upper zone to ensure the maximum use of the aeration but it can also be used at the bottom anoxic and/ or anaerobic zones when it is needed to increase the rate. Figure F-2 shows a bioreactor that only have the packing media in he aerobic zone.

In the case that the influent has a very high Nitrate content and low carbon source then a carbon source such as raw wastewater can be added to the flow to the bottom of the bioreactor as shown in Figure F-3. This is specially applicable if the process is used to denitrify the treated effluent from a treatment process which does not have a denitrification stage. By using multi zone bioreactor the excess sludge and solids generated in that treatment plant can be reduced or eliminated while removing Nitrate. It also increases the capacity of the treatment plant by utilizing some of the raw wastewater as the carbon source.

In the case that the influent has a very high Nitrate content and low carbon source then a carbon source such as raw wastewater can be added to the flow to the bottom of the bioreactor as shown in Figure F-3. This is specially applicable if the process is used to denitrify the treated effluent from a treatment process which does not have a denitrification stage. By using multi zone bioreactor the excess sludge and solids generated in that treatment plant can be reduced or eliminated while removing Nitrate. It also increases the capacity of the treatment plant by utilizing some of the raw wastewater as the carbon source.

Two or more multi zone bioreactor can be used in series for high COD wastewaters to ensure the desired treatment level to meet the standards or to reuse the water. It is also advisable to use an aerobic bioreactor after the multi zone bioreactor/s especially if Nitrogen removal is intended to ensure the nitrification to turn the ammonia Nitrogen into Nitrate form. Nitrate will turn into N2 gas when it is returned into the bottom of the multi zone bioreactor along with the returned sludge or in a separate internal recycle. Figure-4 is showing a Multi-zone bioreactor (a) that is followed by an aerobic bioreactor (b). In aerobic bioreactor (b) packing media can be used to increase the microorganisms' population in the attached growth form. The connection between the Multi-zone bioreactor (a) and the aerobic bioreactor (b) should be in a way that short circuit in the aerobic bioreactor is avoided. The follow into the aerobic bioreactor (a) can be on top or bottom of the aerobic bioreactor(a). Generally as the aeration provides good mixing short circuit could not be formed even if the flow is enters the aerobic bioreactor (a) on the top unless the tank is small or narrow and the distance between the flow in and out of the aerobic bioreactor is very short.

In the final stage to separate the suspended solids from the effluent to have a clear effluent settling tanks or other means like membranes or micro-strainers and micro-screens can be used.

### The Preferred Method to Implement the Invention

Figure F-5 shows one configuration that can be used to treat sanitary and many industrial wastewaters. In this configuration influent wastewater (line 1) enters a wet-well or equalization tank (pump chamber) based on the wastewater conditions. Return sludge that is separated from the effluent in a settling tank or in a membrane or filtration process (line 4) is returned into same pump chamber. Some of the returned sludge (line 4) can be returned into the aerobic bioreactor if the MLSS there needs to be controlled. The mixture (line 2) then pumped into the bottom of the Multi-zone bioreactor (facultative) and is distributed there. The wastewater after undergoing different treatments in the Multi zone bioreactor (facultative) is flowing from the top of the bioreactor into the adjacent aerobic bioreactor. An Internal recycle (line 5) brings back some of the nitrified water into the pump chamber. Aeration is done in the upper part of the Multi zone bioreactor and in the bottom of the aerobic bioreactor. Water after treated in the aerobic bioreactor is flowing into the settling tank where it loses its solids and clear water is disinfected or filtered or can go through other processes based on the usage of the treated water. Alternatively membrane modules can be used alone or in conjunction with micro-strainers or micro-screens to separate solids from the water. Separated solids are returned to the inlet or pump chamber. Submerged membranes can be used in the aerobic treatment if it is desired then the internal recycle (line 5) is only needed to bring the solids back into the inlet or pump chamber and to ensure a stable concentration of the suspended solids in the membrane chamber or in the aerobic bioreactor.

To maximize the efficiency of the treatment, a packing media with high specific surface area and a rough surface to encourage a rapid bacteria growth in the form of biofilm is placed inside bioreactor/s. The packing media should be also of non clogging nature. Although different packing media can be used but a specific media with high specific surface area is designed that works better and it is self cleaning and does not clog. This packing media can be molded of different plastics. Special powders or fillers can be added to the polymer to increase the microscopic surface area and encourage microbial growth on the surface. Figure F-6 shows the special design of this packing media. As it is shown in Figure F-7, Figure F-8 and Figure F-9, each piece is supplied with female connectors in one side and male connectors in the other side. Each piece sits in the back of the other piece to assemble and form a block. Figure F-12 shows a photo of inserted pieces together. Figure F-7, Figure F-8, Figure F-9, and Figure F -10 show different angel views and details of the said piece. Figure F11 land Figure F-12 show how the assembled block sits on top of each other. Each layer sits on top the other layer with 90 degree turn. This way the channels to carry away the sloughed and peeled pieces of biofilm are crossed in each layer to maximize the mixing and prevent channeling.

### INDUSTRIAL APPLICABILITY

The method of present invention can be applied to any form of biological wastewater treatment plants be it small or large, domestic or industrial. It can be used to make new plants or can be used in conjunction of the existing plants to increase the capacity or quality of the effluent or to decrease or eliminate the excess biological sludge production or all or some of the above together.

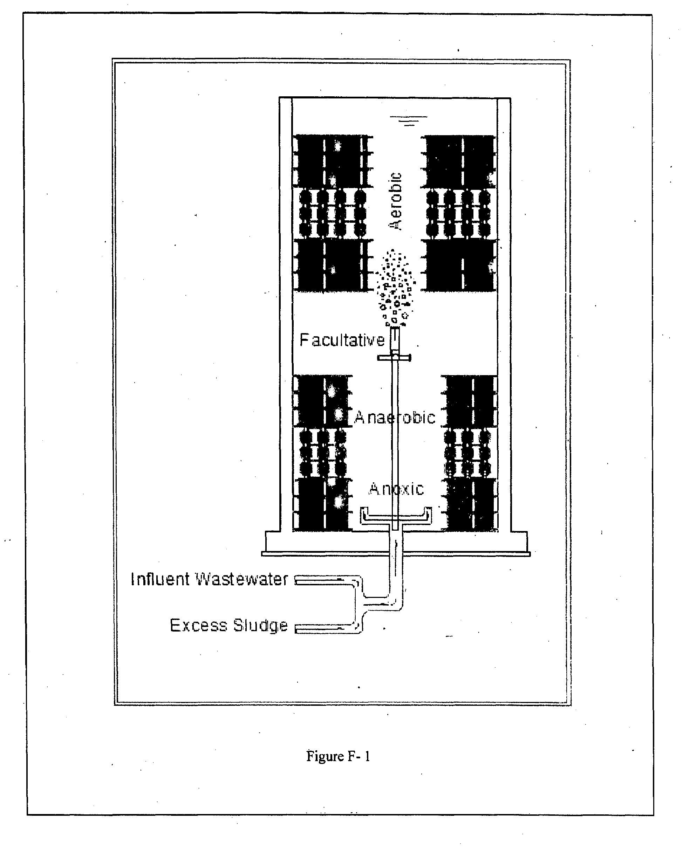

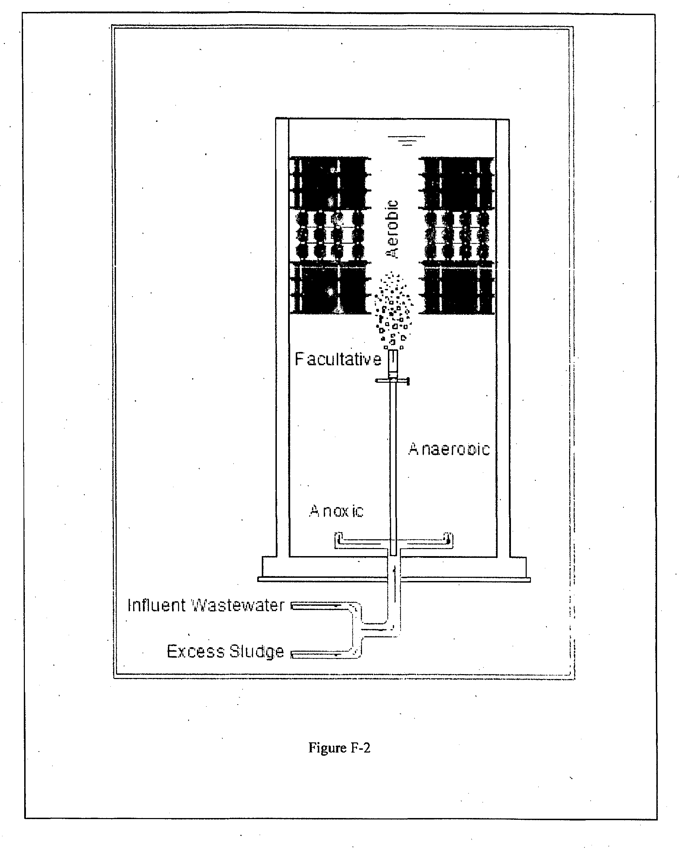

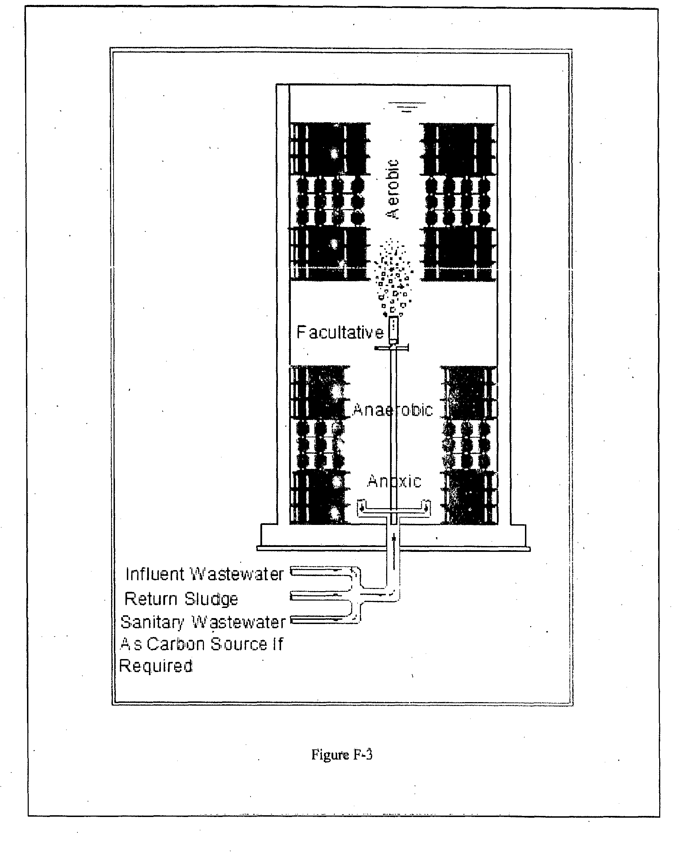

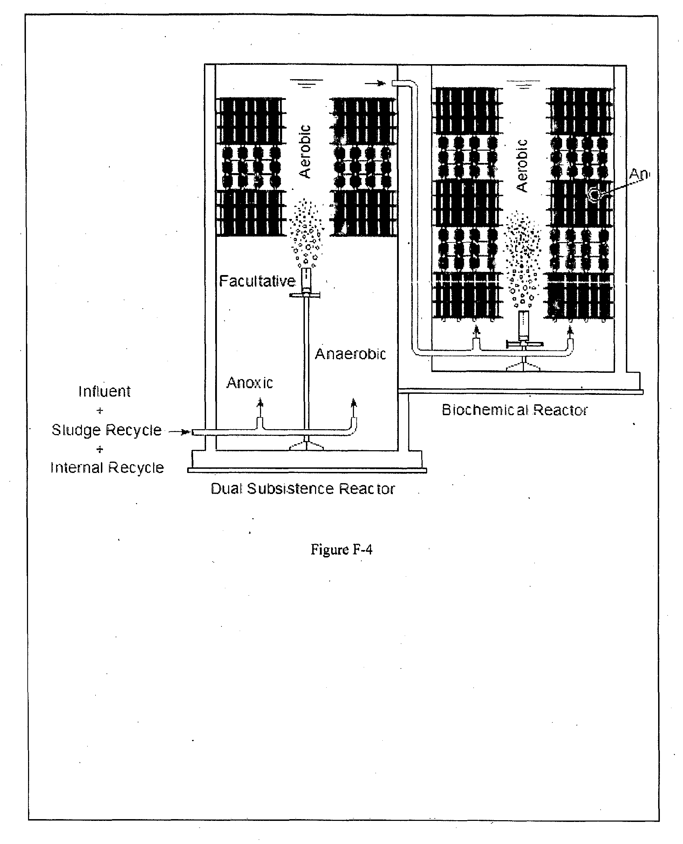

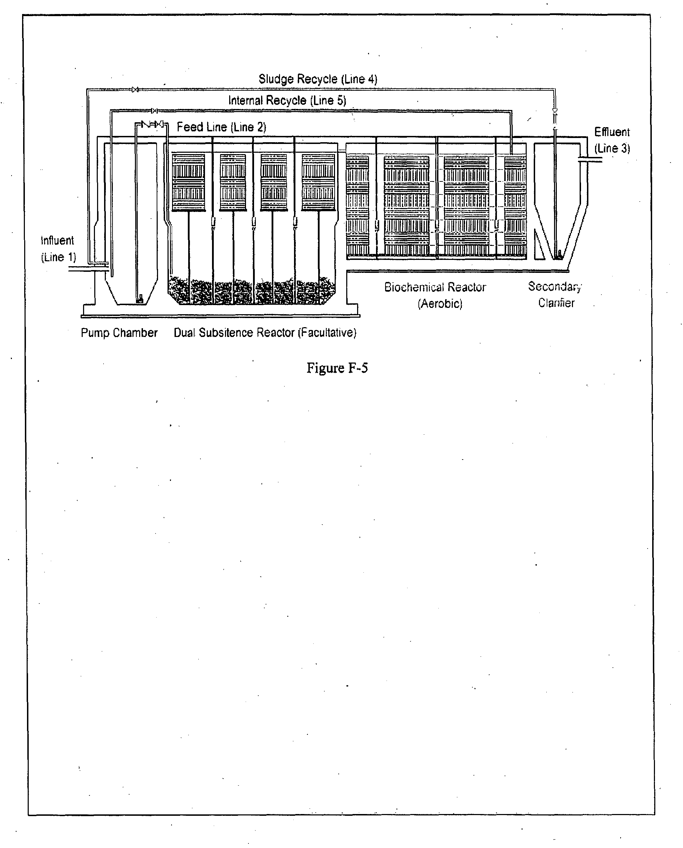

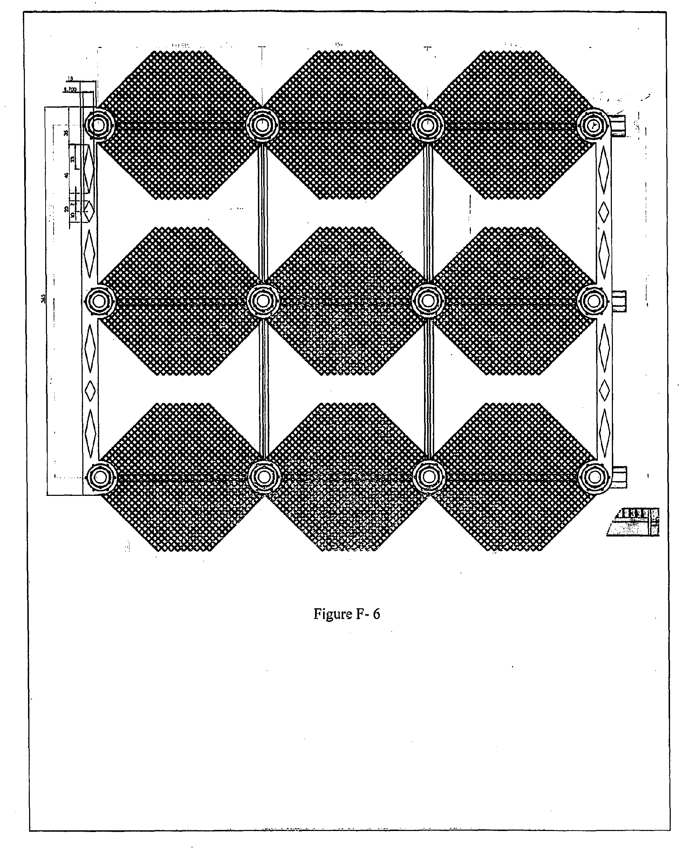

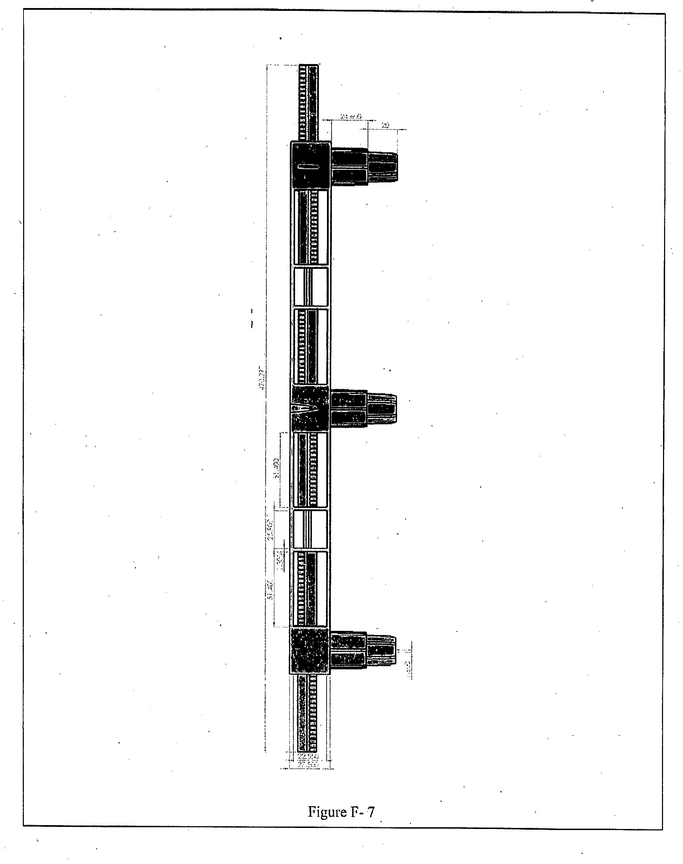

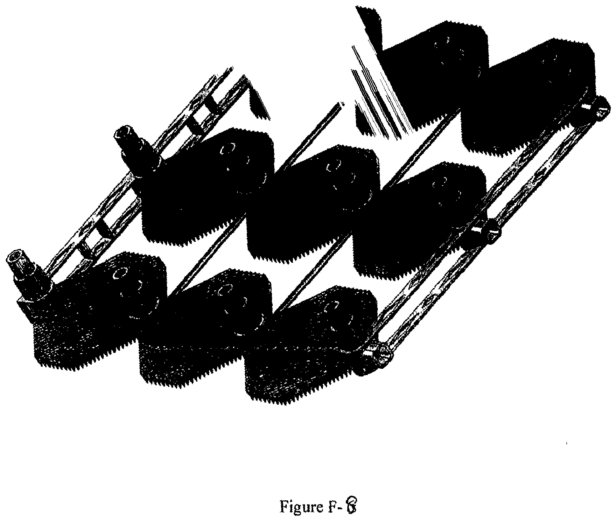

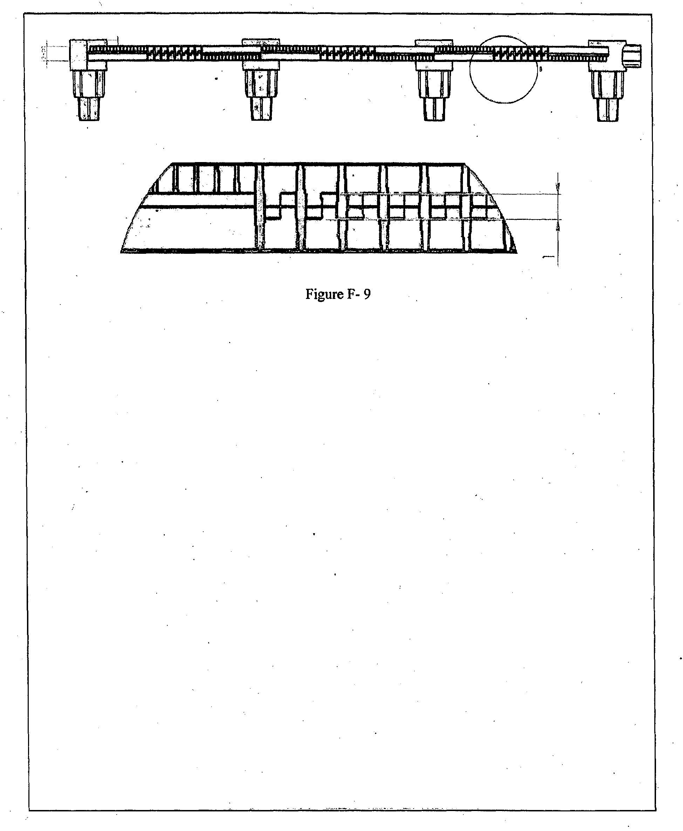

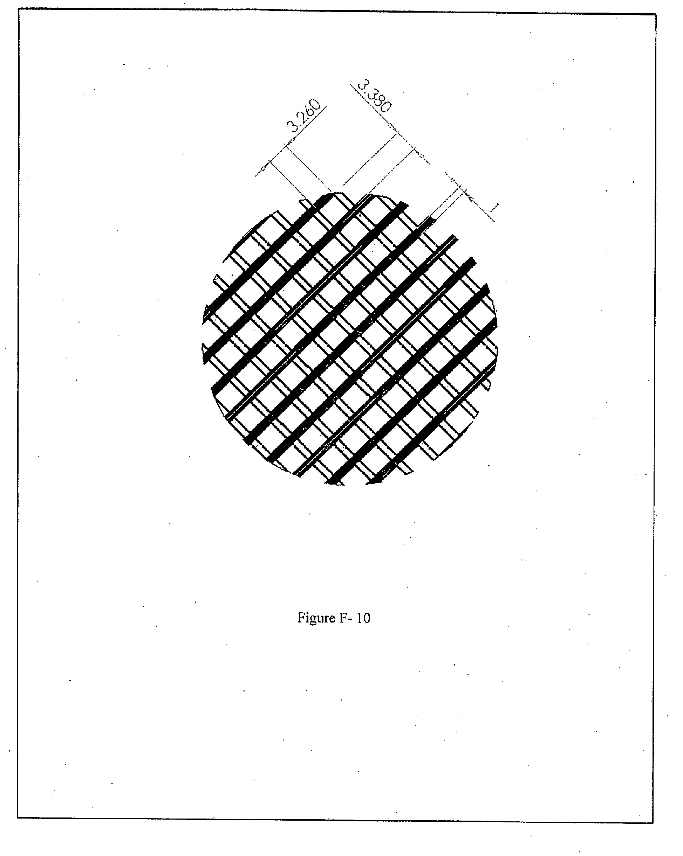

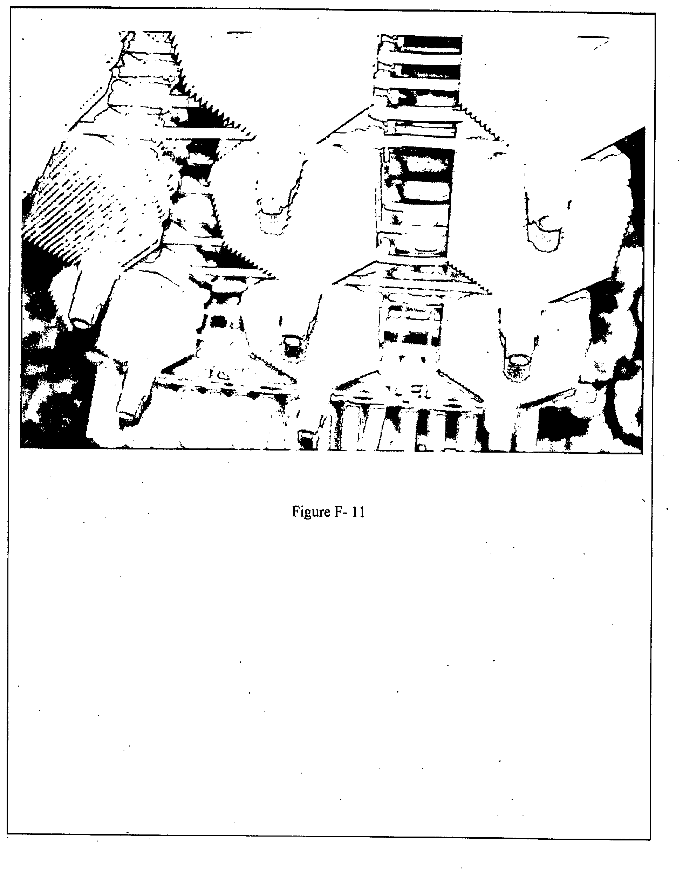

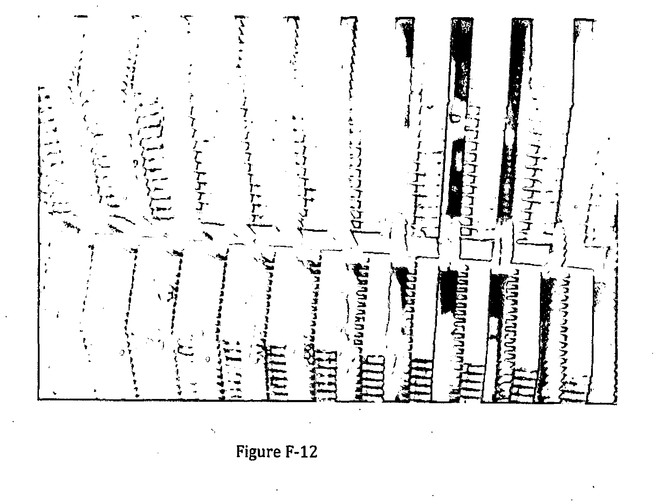

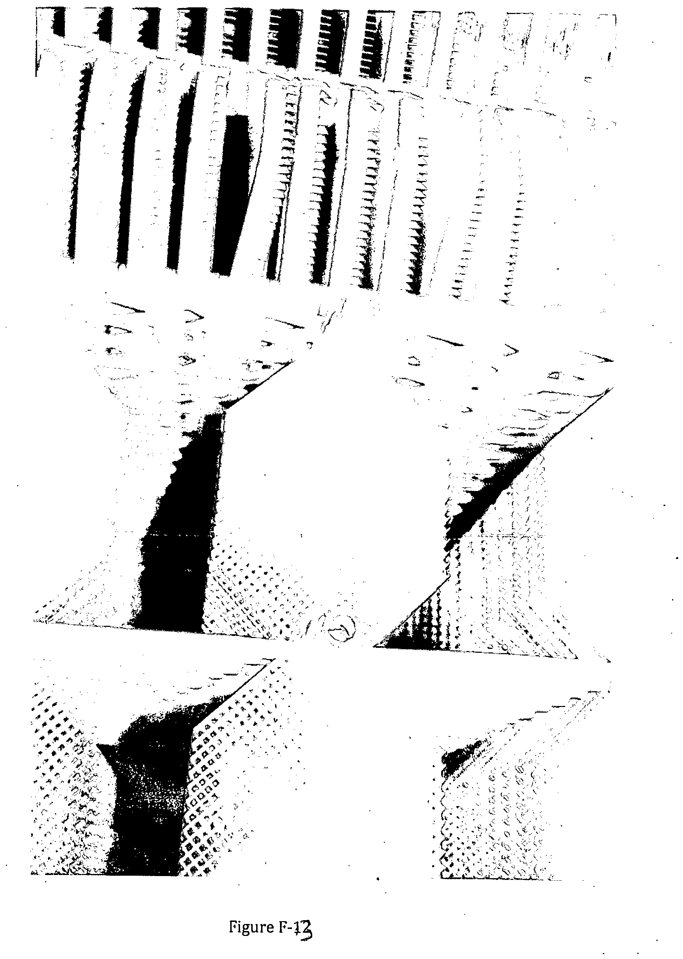

## Claims

1. A process for treating wastewater mixed with excess sludge in a multi-zone bioreactor which has a means of turbulence aeration in the middle or upper part thereof and no aeration or oxygen in a lower part thereof, said process comprising causing turbulent flow in the middle or upper parts of the bioreactor with said means of turbulence aeration;
introducing influent wastewater mixed with excess sludge generated by a treatment plant into the bottom of the multi-zone bioreactor and flowing out the treated wastewater mixed with excess sludge from the top of said bioreactor, thereby providing overall flow inside said bioreactor from the bottom to the top of said bioreactor and forming different zones due to the availability of nitrate and oxygen;
whereby the flow in the reactor leads to
distribution of the influent wastewater mixed with excess sludge at the bottom of the bioreactor, followed by movement of the influent wastewater mixed with excess sludge upwards through the formed anoxic, anaerobic, facultative and aerobic zones from the bottom towards the top of the bioreactor;
wherein facultative bacteria consume the dead microorganisms and aerobic bacteria and wherein the resulting stress due to the turbulent movement of cells between different conditions and the rapid and recurring changes in the oxidation reduction potentials of their environment initiate futile cycle which causes uncoupling the energy and growth cycle and will lead to a state of high energy production instead of new cell production thereby leading to the total and/or partial elimination of excess biological sludge formation.

2. The process of claim 1, wherein odorous agents generated in anaerobic conditions below the means of aeration are oxidized in a top aerobic part of said bioreactor.

3. The process of any of the previous claims, wherein Nitrogen gas which may be generated in an anoxic zone will be stripped out by said means of aeration.

4. The process of the previous claims, further comprising placing packing media at the bottom of the bioreactor to increase microbial biomass at the bottom of the bioreactor.

5. The process of any of the previous claims, further comprising using packing media at the upper part of the bioreactor where aeration is taking place to ensure the existence of a large microorganisms population to utilize the aeration and the resultant dissolved Oxygen in a maximum fashion.

6. The process of any of the previous claims, further comprising adding into the bottom of the bioreactor a carbon source, such as raw wastewater, when the influent excess biological sludge has high nitrate and low carbon source.

7. The process of the previous claims, comprising further treating said flow that leaves said bioreactor in a second bioreactor which is an aerobic bioreactor.

8. The process of claim 7, comprising using, in said second bioreactor, packing media to increase the microorganisms' population in the attached growth form.

## Patentansprüche

1. Verfahren zur Behandlung von mit Schlammüberschuss vermischtem Abwasser in einem Mehrzonen-Bioreaktor, der in seinem mittleren oder oberen Teil ein Mittel zur Turbulenzlüftung und in seinem unteren Teil weder Belüftung noch Sauerstoff aufweist, wobei das Verfahren Folgendes umfasst:
Erzeugen einer Wirbelströmung in den mittleren oder oberen Teilen des Bioreaktors mittels Wirbelbelüftung;
Einleiten von Abwasser, das mit von einer Kläranlage erzeugtem Schlammüberschuss gemischt ist und in den Unterteil des Mehrzonen-Bioreaktors einfließt, und
von aufbereitetem Abwasser gemischt mit Schlammüberschuss vom oberen Teil des Bioreaktors, wodurch eine Gesamtströmung innerhalb des Bioreaktors von unten nach oben erzeugt wird und verschiedene Zonen aufgrund des vorhandenen Nitrats und Sauerstoffs gebildet werden; wobei die Strömung im Reaktor zu einer Verteilung des mit Schlammüberschuss gemischten einfließenden Abwassers am unteren Teil des Bioreaktors führt, woraufhin eine Bewegung des mit Schlammüberschuss gemischten einfließenden Abwassers nach oben durch die gebildeten anoxischen, anaeroben, fakultativen und aeroben Zonen im Bioreaktor von unten nach oben erfolgt;
wobei fakultative Bakterien die abgestorbenen Mikroorganismen und aeroben Bakterien verzehren und wobei der daraus resultierende Druck aufgrund der Wirbelbewegung der Zellen unter verschiedenen Bedingungen und die raschen und wiederkehrenden Veränderungen der Oxidations-Reduktions-Potentiale ihrer Umgebung einen sinnlosen Zyklus in Gang setzen, der eine Entkopplung des Energie- und Wachstumszyklus bewirkt und zu einer hohen Energieproduktion anstelle der Produktion neuer Zellen führt, was zur vollständigen und/oder teilweisen Beseitigung der übermäßigen biologischen Schlammbildung führt.

2. Verfahren nach Anspruch 1, wobei Geruchsstoffe, die unter anaeroben Bedingungen unterhalb der Belüftungseinrichtung erzeugt werden, in einem oberen aeroben Teil des Bioreaktors oxidiert werden.

3. Verfahren nach einem der vorhergehenden Ansprüche, wobei das Stickstoffgas, das in einer anoxischen Zone erzeugt werden kann, durch die Belüftungseinrichtung entfernt wird.

4. Das Verfahren nach den vorhergehenden Ansprüchen umfasst ferner das Anbringen von Füllmaterial im unteren Bereich des Bioreaktors, um die mikrobielle Biomasse im unteren Teil des Bioreaktors zu vermehren.

5. Das Verfahren nach einem der vorhergehenden Ansprüche umfasst ferner die Verwendung von Füllkörpern im oberen Teil des Bioreaktors, wo die Belüftung stattfindet, um sicherzustellen, dass eine große Population von Mikroorganismen vorhanden ist, um die Belüftung und den daraus entstehenden gelösten Sauerstoff optimal zu nutzen

6. Das Verfahren nach einem der vorhergehenden Ansprüche umfasst ferner die Zugabe einer Kohlenstoffquelle, wie z. B. unbehandeltes Abwasser, in den unteren Teil des Bioreaktors, wenn der einfließende überschüssige biologische Schlamm einen hohen Nitratgehalt und eine geringe Kohlenstoffquelle aufweist.

7. Verfahren nach den vorhergehenden Ansprüchen, für die weitere Behandlung des genannten Abflusses, der den besagten Bioreaktor verlässt, und in einen zweiten Bioreaktor, den sogenannten aeroben Bioreaktor fließt.

8. Verfahren nach Anspruch 7, wonach im zweiten Bioreaktor Füllkörpern verwendet werden, um die Population der Mikroorganismen in der angefügten Wachstumsform zu vermehren.

## Revendications

1. Procédé de traitement des eaux usées mélangées à des boues en excès dans un réacteur biologique multizone lequel dispose d'un moyen d'aération par turbulence dans la partie centrale ou supérieure de celui-ci et n'ayant pas d'aération ou d'oxygène dans une partie inférieure de celui-ci, ledit procédé comprenant
le fait de provoquer un écoulement turbulent dans les parties centrale ou supérieure du réacteur biologique par le biais dudit moyen d'aération par turbulence ;
le fait d'introduire des eaux usées mélangées à des boues en excès d'influent générées par une station de traitement au fond du réacteur biologique multizone et d'évacuer les eaux usées mélangées à des boues en excès traitées par le haut dudit réacteur biologique, en fournissant ainsi un écoulement global à l'intérieur dudit réacteur biologique allant du fond vers le haut dudit réacteur biologique et formant différentes zones dues à la disponibilité de nitrate et d'oxygène ;
grâce à quoi l'écoulement dans le réacteur conduit à une répartition des eaux usées mélangées à des boues en excès d'influent au fond du réacteur biologique, suivie d'un déplacement des eaux usées mélangées à des boues en excès d'influent vers le haut à travers des zones anoxie, anaérobie, facultative et aérobie formées du fond vers le haut du réacteur biologique ;
où des bactéries facultatives consomment les micro-organismes morts et les bactéries aérobie et où le stress résultant dû au déplacement turbulent de cellules entre différentes conditions et les changements rapides et récurrents des potentiels d'oxydoréduction de leur environnement initient un cycle futile lequel provoque un désaccouplement de l'énergie et du cycle de croissance et conduira à un état de forte production d'énergie au lieu d'une production de nouvelles cellules conduisant ainsi à l'élimination partielle et/ou totale de formation de boues biologiques en excès.

2. Procédé selon la revendication 1, dans lequel des agents odorants générés dans des conditions anaérobie sous le moyen d'aération sont oxydés dans une partie aérobie supérieure dudit réacteur biologique.

3. Procédé selon l'une quelconque des revendications précédentes, dans lequel de l'azote gazeux lequel peut être généré dans une zone anoxie sera chassé par ledit moyen d'aération.

4. Procédé selon les revendications précédentes, comprenant en outre le fait de placer un milieu de garnissage au fond du réacteur biologique afin d'augmenter la biomasse microbienne au fond du réacteur biologique.

5. Procédé selon l'une quelconque des revendications précédentes, comprenant en outre le fait d'utiliser un milieu de garnissage au niveau de la partie supérieure du réacteur biologique où l'aération a lieu afin de garantir l'existence d'une importante population de micro-organismes pour utiliser l'aération et l'oxygène dissous résultant d'une manière optimale.

6. Procédé selon l'une quelconque des revendications précédentes, comprenant en outre le fait d'ajouter au fond du réacteur biologique une source de carbone, telle que des eaux usées brutes, lorsque les boues biologiques en excès d'influent présentent une source riche en nitrate et pauvre en carbone.

7. Procédé selon les revendications précédentes, comprenant en outre le fait traiter ledit écoulement qui quitte ledit réacteur biologique dans un second réacteur biologique lequel est un réacteur biologique aérobie.

8. Procédé selon la revendication 7, comprenant en outre le fait d'utiliser, dans ledit second réacteur biologique, un milieu de garnissage afin d'augmenter la population de micro-organismes sous la forme de croissance fixée.
